# EUROPEAN PATENT APPLICATION

(11) **EP 1 238 945 A1**
(43) Date of publication of application: **11.09.2002**
(21) Application number: 01126062.7
(22) Date of filing: 01.11.2001
(51) Int. Cl.: C02F 1/461

(54) **Electrolyzed water production apparatus**

(30) Priority: 07.03.2001 JP 2001063451
(71) Applicant: HOSHIZAKI DENKI KABUSHIKI KAISHA, Toyoake-shi, Aichi-ken (JP)
(72) Inventor: Kamitani, Yoshinori, Toyoake-shi, Aichi-ken (JP); Fujita, Masahiro, Nakashima-gun, Aichi-ken (JP); Miyachi, Masato, Toyoake-shi, Aichi-ken (JP)
(74) Representative: Blumbach, Kramer & Partner GbR

(57) **Abstract**

An electrolyzed water production apparatus including an electrolyzer the interior of which is subdivided into first and second electrode chambers by means of a cation permeable partition membrane, wherein the first electrode chambers is supplied with city service water to produce electrolyzed water and discharge the electrolyzed water therefrom for use, while the second electrode chamber is supplied with salt or acid solution of predetermined concentration to retain the solution therein during operation of the production apparatus.

## Description

The present invention relates to an electrolyzed water production apparatus including an electrolytic cell the interior of which is subdivided into an anode chamber and a cathode chamber by means of a cation-permeable partition membrane.

In an electrolyzed water production apparatus of this kind, electrolyzed acidic water is produced by electrolysis of diluted salt water supplied into the anode chamber, while electrolyzed alkaline water is produced by electrolysis of the diluted salt water supplied into the cathode chamber. The acidic water is used as sterilizing water in various fields, and the alkaline water is used as washing water superior in washing action..

Although in the electrolyzed water production apparatus, both the electrolyzed acidic water and alkaline water are inevitably produced, either the electrolyzed acidic water or alkaline water is wasted in the case that only the other electrolyzed water is used. Accordingly, in the electrolyzed water production apparatus, salt content of more than 95% effective for electrolysis is remained in the solution. On this point of view, the utilization efficiency of salt content effective for electrolysis is lowered.

It is, therefore, a primary object of the present invention to provide an electrolyzed water production apparatus capable of enhancing the utilization efficiency of salt content effective for electrolysis in the solution.

According to the present invention, the object is accomplished by providing an electrolyzed water production apparatus including an electrolyzer the interior of which is subdivided into first and second electrode chambers by means of a cation permeable partition membrane, wherein the first electrode chambers is supplied with raw water such as city service water to produce electrolyzed water and discharge the electrolyzed water therefrom for use, while the second electrode chamber is supplied with salt or acid solution of predetermined concentration to retain the solution therein during operation of the production apparatus.

In operation of the electrolyzed water production apparatus, an ion effective for electrolysis in the salt or acid solution retained in the second electrode chamber permeates into the first electrode chamber through the partition membrane and reacts with an ion in the raw water supplied into the first electrode chamber to produce electrolyzed acidic water. In this instance, an amount of salt or acid effective for electrolysis remains in the second electrode chamber and is gradually consumed during operation of the electrolyzed water production apparatus. Thus, only the electrolyzed water is produced in the first electrode chamber without producing any electrolyzed water in the second electrode chamber. This is useful to enhance the utilization efficiency of components effective for electrolysis in the salt or acid solution supplied into the second electrode chamber and to avoid useless discharge of the components effective for electrolysis.

In the electrolyzed water production apparatus, it is preferable that a concentration sensor is provided to detect the concentration of the solution retained in the second electrode chamber, wherein fresh salt or acid solution of predetermined concentration is substituted for the solution retained in the second electrode chamber when the concentration of the solution detected by the sensor becomes less than a predetermined value.

For a better understanding of the present invention, and to show how the same may be carried into effect, reference will now be made, by way of example, to the accompanying drawings, in which:
Fig. 1 is a schematic illustration of a first embodiment of an electrolyzed water production apparatus in accordance with the present invention;
Fig. 2 is a schematic illustration of a second embodiment of an electrolyzed water production apparatus in accordance with the present invention;
Fig. 3 is a schematic illustration of a third embodiment of an electrolyzed water production apparatus in accordance with the present invention;
Fig. 4 is a schematic illustration of a fourth embodiment of an electrolyzed water production apparatus in accordance with the present invention; and
Fig. 5 is a schematic illustration of a fifth embodiment of an electrolyzed water production apparatus in accordance with the present invention.

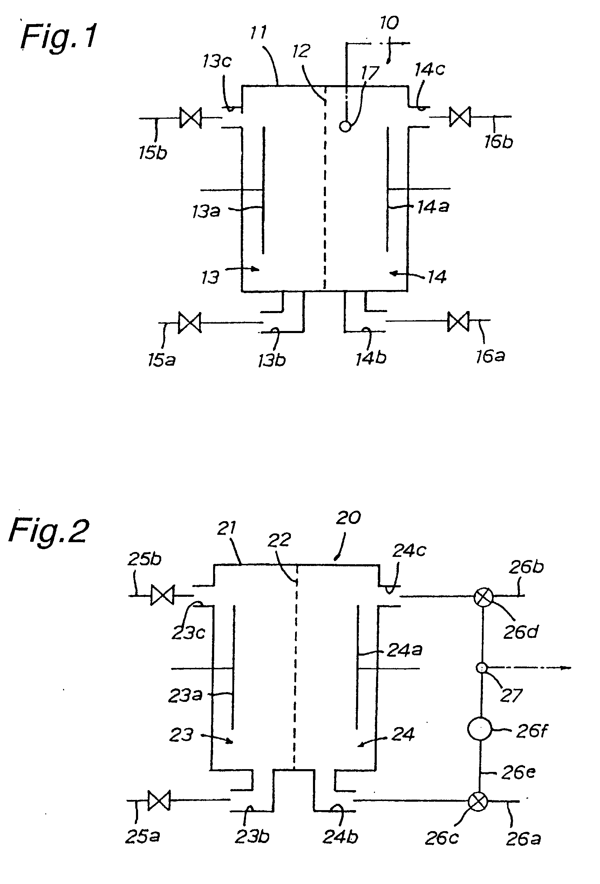

Illustrated in Fig. 1 of the drawings is a first embodiment of an electrolyzed water production apparatus 10 in accordance with the present invention. The electrolyzed water production apparatus 10 includes an electrolyzer 11 the interior of which is subdivided into anode and cathode chambers 13 and 14 by means of a cation-permeable partition membrane 12. The anode chamber 13 is provided therein with a positive electrode 13a and thereon with an inlet port 13b in connection to a water supply conduit 15a such as a city service water pipe and an outlet port 13c in connection to a discharge conduit 15b for discharging electrolyzed water produced in the anode chamber 13. The cathode chamber 14 is provided therein with a negative electrode 14a and thereon with an inlet port 14b in connection to a conduit 16a for supply of hydrochloric acid solution and an outlet port 14c in connection to a discharge conduit 16b for discharging the solution from the cathode chamber 14.

In operation of the electrolyzed water production apparatus 10, the anode chamber 13 is continuously supplied with city service water to produce electrolyzed acidic water in accordance with a supply amount of the city service water, while the cathode chamber 14 is supplied with diluted hydrochloric acid solution of predetermined concentration and retains the solution therein in a condition where a changeover valve on the discharge conduit 16 is positioned to interrupt the discharge of hydrochloric acid solution from the cathode chamber 14. Thus, only the electrolyzed acidic water is discharged from the anode chamber 13 through the discharge conduit 15b and used as sterilizing water.

As is understood from such operation as described above, the anode chamber 13 is adapted as a water flow chamber, while the cathode chamber 14 is adapted as a retention chamber of diluted hydrochloric acid solution. In addition, the cathode chamber 14 is provided with a pH sensor 17 for detecting pH of the diluted hydrochloric acid solution retained therein during operation of the electrolyzed water production apparatus 10.

During operation of the electrolyzed water production apparatus 10, a chlorine-ion effective for electrolysis in the diluted hydrochloric acid solution retained in the cathode chamber 14 permeates into the anode chamber 13 through the partition membrane 12 and reacts with a hydrogen-ion in the city service water supplied into the anode chamber 13 to produce electrolyzed acidic water. In this instance, an amount of hydrochloric acid effective for electrolysis remains in the cathode chamber 14 and is gradually consumed during operation of the electrolyzed water production apparatus 10. Thus, only the electrolyzed acidic water is produced in the anode chamber 13 without producing any electrolyzed alkaline water in the cathode chamber 14. This is useful to enhance the utilization efficiency of components effective for electrolysis in the hydrochloric acid solution supplied into the cathode chamber 14 and to avoid useless discharge of the components effective for electrolysis.

When the pH of hydrochloric acid solution detected by pH sensor 17 becomes more than a predetermined value in accordance with decrease of the concentration of hydrochloric acid solution in the cathode chamber 14, the operation of the electrolyzed water production apparatus 10 is stopped, and the changeover valve on the discharge conduit 16b is switched over to permit discharge of the remaining solution from the cathode chamber 14. Subsequently, the cathode chamber 14 is supplied with fresh diluted hydrochloric acid solution of predetermined concentration, and the operation of the production apparatus 10 is restarted. In the case that the pH sensor 17 is not provided, the production apparatus 10 may be stopped after lapse of a predetermined time to substitute fresh diluted hydrochloric acid solution for the remaining solution.

Although in the operation of the production apparatus 10, the cathode chamber 14 is supplied with the diluted hydrochloric acid solution to produce electrolyzed acidic water in the anode chamber 13, diluted salt water may be supplied into and retained in the cathode chamber 14 for production of electrolyzed acidic water in the anode chamber 13.

Illustrated in Fig. 2 is a second embodiment of an electrolyzed water production apparatus 20 in accordance with the present invention. The electrolyzed water production apparatus 20 includes an electrolyzer 21 the interior of which is subdivided into anode and cathode chambers 23 and 24 by means of an cation-permeable partition membrane 22. The anode chamber 23 is provided therein with a positive electrode 23a and thereon with a water inlet port 23b in connection to a water supply conduit 25a such as a city service water pipe and an outlet port 23c in connection to a discharge conduit 25b for discharging electrolyzed water produced in the anode chamber 23. The cathode chamber 14 is provided therein with a negative electrode 24a and thereon with an inlet port 24b in connection to a diluted salt water supply conduit 26a and an outlet port 24c in connection to a discharge conduit 26b for discharging therethrough the diluted salt water from the cathode chamber 14. The diluted salt water supply conduit 26a and the discharge conduit 26b are connected to a circulation conduit 26e through a pair of changeover valves 26c and 26d to circulate the diluted salt water into the cathode chamber 24 in operation of a circulation pump 26f disposed in the circulation conduit 26e. In addition, a concentration sensor 27 is provided on the circulation conduit 26e to detect the concentration of diluted salt water circulated into the cathode chamber 24.

In operation of the electrolyzed water production apparatus 20, the anode chamber 23 is continuously supplied with city service water to produce electrolyzed acidic water in accordance with a supply amount of the city service water, while the cathode chamber 24 is supplied with diluted salt water of predetermined concentration and retains the diluted salt water therein in a condition where the changeover valves 26c and 26d are positioned to circulate the diluted salt water into the cathode chamber 24 during operation of the circulation pump 26f.. Thus, the electrolyzed acidic water is discharged from the anode chamber 23 through the discharge conduit 25b and used as sterilizing water. As is understood from such operation as described above, the anode chamber 23 is adapted as a water flow chamber, while the cathode chamber 24 is adapted as a retention chamber of diluted salt water.

During operation of the electrolyzed water production apparatus 20, a chlorine-ion effective for electrolysis in the diluted salt water retained in the cathode chamber 24 permeates into the anode chamber 23 through the partition membrane 22 and reacts with a hydrogen-ion in the water supplied into the anode chamber 23 to produce electrolyzed acid water. In this instance, an amount of salt components effective for electrolysis is retained in the cathode chamber 24 and is gradually consumed during operation of the electrolyzed water production apparatus 20. Thus, only the electrolyzed acidic water is produced in the anode chamber 23 and discharged for use while the salt components effective for electrolysis are retained in the cathode chamber 24. This is useful to avoid useless discharge of the salt components effective for electrolysis.

In addition, the diluted salt water in the cathode chamber 24 is circulated into the cathode chamber 24 in operation of the circulation pump 26f to uniform the concentration of salt water retained in the cathode chamber 24 during operation of the production apparatus 20. When the pH of diluted salt water detected by pH sensor 27 becomes more than a predetermined value in accordance with decrease of the concentration of slat component in the cathode chamber 24, the operation of the electrolyzed water production apparatus 20 is stopped, and the changeover valve 26d of discharge conduit 26b is switched over to discharge the remaining slat water from the cathode chamber 24. Subsequently, the cathode chamber 24 is supplied with fresh diluted salt water of predetermined concentration, and the operation of the production apparatus 20 is restarted to produce electrolyzed acidic water in the anode chamber 23.

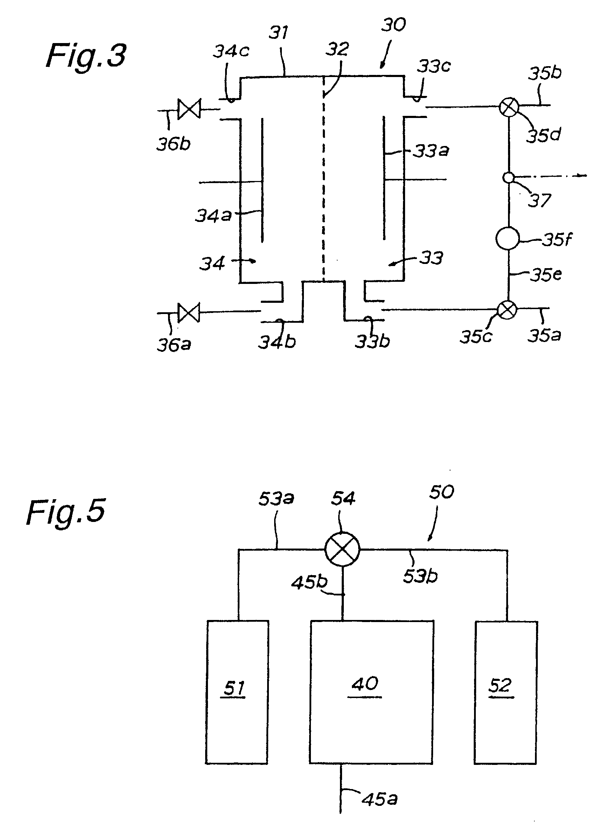

Illustrated in Fig. 3 is a third embodiment of an electrolyzed water production apparatus 30 in accordance with the present invention. The electrolyzed water production apparatus 30 includes an electrolyzer 31 the interior of which is subdivided into anode and cathode chambers 33 and 34 by means of a cation-permeable partition membrane 32. The anode chamber 33 is provided therein with a positive electrode 33a and thereon with an inlet port 33b in connection to a diluted salt water supply conduit 35a and an outlet port 33c in connection to a discharge conduit 35b for discharging the salt water from the anode chamber 33. The diluted salt water supply conduit 35a and the discharge conduit 35b are connected to a circulation conduit 35e through a pair of changeover valves 35c and 35d to circulate the diluted salt water into the anode chamber 33 in operation of a circulation pump 35f disposed in the circulation conduit 35e. In addition, a concentration sensor 37 is provided on the circulation conduit 35e to detect the concentration of diluted salt water circulated into the anode chamber 33. The cathode chamber 34 is provided therein with a negative electrode 34a and thereon with an inlet port 34b in connection to a city service water supply conduit 36a and an outlet port 34c in connection to a discharge conduit 36b for discharging electrolyzed water produced in the cathode chamber 34.

In operation of the electrolyzed water production apparatus 30, the cathode chamber 34 is continuously supplied with city service water from the water supply conduit 36a to produce electrolyzed alkaline water in accordance with a supply amount of the city service water, while the anode chamber 33 is supplied with diluted salt water of predetermined concentration and retains the diluted salt water therein in a condition where the changeover valves 35c and 35d are positioned to circulate the diluted salt water into the anode chamber 33 in operation of the circulation pump 35f. Thus, the electrolyzed alkaline water is discharged from the cathode chamber 34 through the discharge conduit 36b and used as washing water, drinking water, etc. As is understood from such operation as described above, the cathode chamber 34 is adapted as a water flow chamber, while the anode chamber 33 is adapted as a retention chamber of diluted salt water.

During operation of the electrolyzed water production apparatus 30, a sodium-ion effective for electrolysis in the diluted salt water retained in the anode chamber 33 permeates into the cathode chamber 34 through the partition membrane 32 and reacts with a hydroxide-ion in the city service water supplied into the cathode chamber 34 to produce electrolyzed alkaline water. In this instance, an amount of salt component effective for electrolysis is retained in the anode chamber 33 and is gradually consumed during operation of the electrolyzed water production apparatus 30. Thus, only the electrolyzed alkaline water is produced in the cathode chamber 34 and discharged for use while the salt component effective for electrolysis is retained in the anode chamber 33. This is useful to avoid useless discharge of the salt component effective for electrolysis.

In addition, the diluted salt water in the anode chamber 33 is circulated in operation of the circulation pump 35f to uniform the concentration of diluted salt water retained in the anode chamber 33 during operation of the production apparatus 30. When the pH of salt water detected by pH sensor 37 becomes more than
a predetermined value in accordance with decrease of the concentration of slat component in the anode chamber 33, the operation of the electrolyzed water production apparatus 30 is stopped, and the changeover valve 35d of discharge conduit 35b is switched over to discharge the remaining slat water from the anode chamber 33. Subsequently, the anode chamber 33 is supplied with fresh diluted salt water of predetermined concentration, and the operation of the production apparatus 30 is restarted to produce electrolyzed alkaline water in the cathode chamber 34.

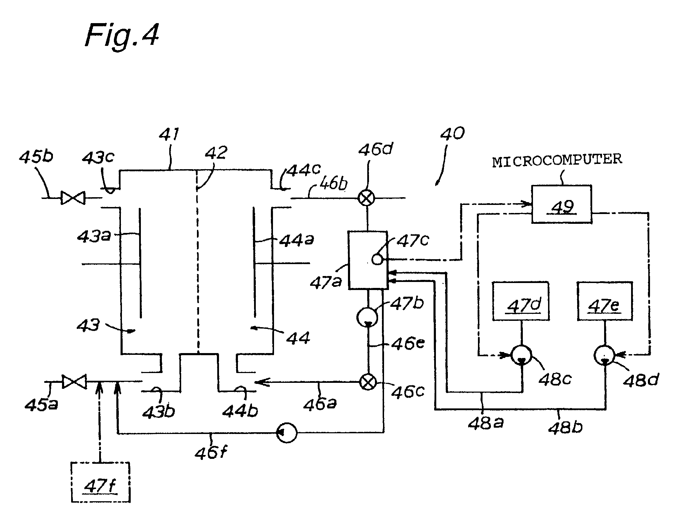

Illustrated in Fig. 4 is a fourth embodiment of an electrolyzed water production apparatus 40 in accordance with the present invention. The electrolyzed water production apparatus 40 includes an electrolyzer 41 the interior of which is subdivided into electrode chambers 43 and 44 by means of a cation-permeable partition membrane 42 The electrode chamber 43 is provided therein with an electrode 43a and thereon with an inlet port 43b in connection to a water supply conduit 45a for supplying city service water and an outlet port 43c in connection to a discharge conduit 45b for discharging electrolyzed water. Similarly, the electrode chamber 44 is provided therein with an electrode 44a and thereon with an inlet port 44b in connection to a conduit 46a for supplying electrolysis-accelerant solution and an outlet port 44c in connection to a discharge conduit 46b for discharging the electrolysis-accelerant solution. The solution supply conduit 46a and the discharge conduit 46b are connected to a circulation conduit 46e through a pair of changeover valves 46c and 46d to circulate the electrolysis-accelerant solution into the electrode chamber 44.

In the electrolyzed water production apparatus 40, a concentration adjustment tank 47a and a circulation pump 47b are disposed in the circulation conduit 46e. The concentration adjustment tank 47a is provided therein with a concentration sensor 47c. In this embodiment, the electrolyzed water production apparatus 40 includes a pair of electrolysis-accelerant solution retention tanks 47d and 47e for storing an amount of electrolysis-accelerant solution of high concentration. The retention tanks 47d and 47e are connected to the concentration adjustment tank 47a through solution supply conduits 48a and 48b, and supply pumps 48c and 48d are disposed in the solution supply conduits 48c and 48d, respectively.

A microcomputer 49 is connected to the concentration sensor 47c in the concentration adjustment tank 47a and is responsive to a detection signal applied from the concentration sensor 47c to activate either the supply pump 48c or 48d when the concentration of electrolysis-accelerant solution in tank 47a decreases less than a predetermined value thereby to supply the electrolysis-accelerant solution into the concentration adjustment tank 47a from the retention tank 47d or 47e so that the concentration of electrolysis-accelerant solution is adjusted to a predetermined value. Under such control of the microcomputer 49, the concentration of electrolysis-accelerant solution circulated into the electrode chamber 44 through the circulation conduit 46e is maintained in a predetermined value.

In the electrolyzed water production apparatus 40, salt water or hydrochloric acid solution is selectively used as the electrolysis-accelerant solution in the electrolyzer 41. In this embodiment, an amount of salt water of high concentration is stored in one of the solution retention tanks 47d and 47e, while an amount of hydrochloric acid solution of high concentration is stored in the other retention tank. In addition, the concentration adjustment tank 47a is connected to the water supply conduit 45a by way of a bypass conduit 46f, and an ancillary pump is disposed in the conduit 46f to supply a small amount of the electrolysis-accelerant solution from the concentration adjustment tank47a into the water supply conduit 45a when activated under control of the computer 49. With such supply of the electrolysis-accelerant solution to the water supply conduit 45a, the electrolysis efficiency of the city service water can be enhanced when the conductivity of the water is low. In a practical embodiment of the present invention, an electrolysis-accelerant solution tank 47f may be substituted for the bypass conduit 46f in connection to the concentration adjustment tank 47a to directly supply a small amount of the electrolysis-accelerant solution into the water supply conduit 45a.

In operation of the electrolyzed water production apparatus 40, the polarity of voltage applied to the electrodes 43a and 44a is reversed under control of the computer 49 in such a manner that the electrode chamber 43 acts as an anode chamber or a cathode chamber whereas the electrode chamber 44 acts as a cathode chamber or an anode chamber. When the electrode chamber 43 acts as an anode chamber whereas the electrode chamber 44 acts as a cathode chamber, electrolyzed acidic water is produced in the electrode chamber 43 and discharged for use from the outlet port 43c while the electrolysis-accelerant solution is circulated into the electrode chamber 44 by operation of the circulation pump 47b in a condition where the changeover valve 46d is positioned to circulate the electrolysis-accelerant solution into the concentration adjustment tank 47a . When the electrode chamber 43 acts as a cathode chamber whereas the electrode chamber 44 acts as an anode chamber, electrolyzed alkaline water is produced in the electrode chamber 43 and discharged for use from the outlet port 43c while the electrolysis-accelerant solution is circulated into the electrode chamber 44 by operation of the circulation pump 47b in a condition where the changeover valve 46d is positioned to circulate the electrolysis-accelerant solution into the concentration adjustment tank 47a.

In this embodiment, an amount of hydrochloric acid solution of high concentration is stored in either the electrolysis-accelerant solution tanks 47d or 47e, and an amount of sodium hydroxide solution of high concentration is stored in the other accelerant solution tank. The concentration adjustment tank 47a is provided with a pH sensor for detecting pH of salt solution in tank 47a. Thus, the concentration adjustment tank 47a is supplied with the hydrochloric acid solution or sodium hydroxide solution from the solution tank 47d or 47e by operation of the supply pumps 48c or 48d in such a manner that the pH of salt solution in the concentration adjustment tank 47a is adjusted to a predetermined value. In this instance, the hydrochloric acid solution may be mixed with the sodium hydroxide solution to supply an amount of sodium chloride solution into the concentration adjustment tank 47a thereby to adjust the concentration of salt solution in tank 47a to the predetermined value.

Illustrated in Fig. 5 is a fifth embodiment of an electrolyzed water production apparatus 50 in accordance with the present invention, wherein the discharge conduit 45b of the electrode chamber 43 in the electrolyzed water production apparatus 40 shown in Fig. 4 is connected to a pair of storage tanks 51 and 52 through a changeover valve 54 and discharge conduits 53a and 53b. In this embodiment, the changeover valve 54 is switched over to selectively store the electrolyzed acidic water or alkaline water discharged from the electrode chamber 43 in the storage tank 51 or 52. With such arrangement of the storage tanks 51 and 52, a large amount of electrolyzed acidic water or alkaline water can be used at once in necessity. In a practical embodiment, a plurality of storage tanks may be connected to the discharge conduit 45b of the electrode chamber 43 through a changeover valve to selectively store therein electrolyzed strong acidic water, weak acidic water, strong alkaline water and weak alkaline water.

## Claims

1. An electrolyzed water production apparatus including an electrolyzer the interior of which is subdivided into first and second electrode chambers by means of a cation permeable partition membrane,
**characterized in that** the first electrode chamber is supplied with raw water such as city service water to produce electrolyzed water and discharge the electrolyzed water therefrom for use, while the second electrode chamber is supplied with salt or acid solution of predetermined concentration to retain the solution therein during operation of the production apparatus.

2. An electrolyzed water production apparatus as claimed in claim 1, wherein a concentration sensor is provided to detect the concentration of the solution retained in the second electrode chamber, and wherein fresh salt or acid solution of predetermined concentration is substituted for the solution retained in the second electrode chamber when the concentration of the solution detected by the sensor becomes less than a predetermined value.

3. An electrolyzed water production apparatus as claimed in claim 1, Wherein a circulation conduit is connected to inlet and outlet ports of the second electrode chamber to circulate the salt or acid solution into the second electrode chamber.

4. An electrolyzed water production apparatus as claimed in claim 3, wherein a concentration adjustment tank is disposed in the circulation conduit to store an amount of electrolysis-accelerant solution for adjusting the concentration of the salt or acid solution circulated into the second electrode chamber to a predetermined value.

5. An electrolyzed water production apparatus as claimed in claim 4, wherein the electrolysis-accelerant solution stored in the concentration adjustment tank is selected from the group consisting of salt solution, acid solution and alkaline solution.

6. An electrolyzed water production apparatus as claimed in claim 1, wherein a plurality of storage tanks are connected to the first electrode chamber to selectively store the electrolyzed water discharged therefrom in accordance with the property of the electrolyzed water.

7. An electrolyzed water production apparatus as claimed in claim 1, wherein the first electrode chamber is in the form of an anode chamber supplied with the raw water to produce electrolyzed acidic water, while the second electrode chamber is in the form of a cathode chamber supplied with the salt or acid solution to retain the solution therein during operation of the production apparatus.

8. An electrolyzed water production apparatus as claimed in claim 7, wherein hydrochloric acid solution is used as the acid solution.

9. An electrolyzed water production apparatus as claimed in claim 1, wherein the first electrode chamber is in the form of a cathode chamber supplied with the raw water to produce electrolyzed alkaline water, while the second electrode chamber is in the form of an anode chamber supplied with the salt solution to retain the solution therein during operation of the production apparatus.

10. An electrolyzed water production apparatus as claimed in claim 9, wherein the salt solution supplied to the anode chamber is alkaline solution.

11. An electrolyzed water production apparatus as claimed in claim 9, wherein the salt solution supplied to the anode chamber is sodium hydroxide solution.

12. An electrolyzed water production apparatus as claimed in claim 9, wherein the salt solution supplied to the anode chamber is salt water.
